(19) **Europäisches Patentamt / European Patent Office / Office européen des brevets**

(11) **EP 4 144 471 B1**

(12) **EUROPEAN PATENT SPECIFICATION**

(45) Date of publication and mention
of the grant of the patent:
**06.08.2025   Bulletin 2025/32**

(21) Application number: **21828578.1**

(22) Date of filing: **22.06.2021**

(51) International Patent Classification (IPC):
**B23K 11/14** (2006.01)   **C22C 38/00** (2006.01)
**C22C 38/14** (2006.01)   **C22C 38/60** (2006.01)
**B23K 11/16** (2006.01)   **B23K 35/02** (2006.01)
**B23K 101/00** (2006.01)   **B23K 101/34** (2006.01)
**B23K 101/18** (2006.01)   **C22C 38/02** (2006.01)
**C22C 38/04** (2006.01)   **C22C 38/06** (2006.01)
**C22C 38/08** (2006.01)   **C22C 38/10** (2006.01)
**C22C 38/12** (2006.01)   **C22C 38/16** (2006.01)
**C22C 38/38** (2006.01)

(52) Cooperative Patent Classification (CPC):
**C22C 38/02; B23K 11/14; B23K 11/16;
B23K 11/166; B23K 35/02; C22C 38/002;
C22C 38/005; C22C 38/04; C22C 38/06;
C22C 38/08; C22C 38/10; C22C 38/12;
C22C 38/14; C22C 38/16; C22C 38/38;**   (Cont.)

(86) International application number:
**PCT/JP2021/023562**

(87) International publication number:
**WO 2021/261479 (30.12.2021 Gazette 2021/52)**

(54) **PROJECTION WELD JOINT AND PROJECTION WELDING METHOD**

PROJEKTIONSSCHWEISSVERBINDUNG UND PROJEKTIONSSCHWEISSVERFAHREN

JOINT DE SOUDURE PAR PROJECTION ET PROCÉDÉ DE SOUDAGE PAR PROJECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **25.06.2020   JP 2020109494**

(43) Date of publication of application:
**08.03.2023   Bulletin 2023/10**

(73) Proprietor: **JFE Steel Corporation
Tokyo 100-0011 (JP)**

(72) Inventors:
• **YAMAGISHI, Daiki
Tokyo 100-0011 (JP)**

• **TAKASHIMA, Katsutoshi
Tokyo 100-0011 (JP)**
• **MATSUDA, Hiroshi
Tokyo 100-0011 (JP)**

(74) Representative: **Hoffmann Eitle
Patent- und Rechtsanwälte PartmbB
Arabellastraße 30
81925 München (DE)**

(56) References cited:
WO-A1-2015/127431      JP-A- 2010 106 343
JP-A- 2010 116 592      JP-A- 2012 082 890
JP-A- 2012 157 900      JP-A- 2012 179 646
JP-A- 2013 078 784      JP-A- 2019 173 157

(52) Cooperative Patent Classification (CPC): (Cont.)
**C22C 38/60;** B23K 2101/006; B23K 2101/18;
B23K 2101/34

# EP 4 144 471 B1

## Description

### Technical Field

The present invention relates to a projection welded joint formed by joining a high strength steel sheet and a nut by performing projection welding and, in particular, a projection welded joint which can preferably be used as a member for structural parts of an automobile or the like and to a projection welding method for manufacturing the welded joint.

### Background Art

Nowadays, in response to growing awareness of environmental issues, since $CO_2$ emission regulations are being tightened, the weight reduction of an automobile body for the purpose of an improvement in fuel efficiency is an issue to be addressed in the automobile industrial field. Therefore, a high strength steel sheet is increasingly being used for automotive parts to decrease the thickness of the parts, and a steel sheet having a tensile strength (TS) of 980 MPa or higher is considered.

Incidentally, to assemble an automobile, parts manufactured by performing press forming are fitted together by performing resistance welding in many cases from the viewpoint of cost and efficiency. Regarding resistance welding, resistance spot welding is performed to fit together the parts in most processes for assembling an automobile. However, in places too narrow for the welding gun of a resistance spot welding machine to enter, bolt fastening is performed to fit together the parts. Also, in the case where a steel sheet and another kind of material (for example, aluminum or a resin) are joined, bolt fastening is performed in many cases. In the case of bolt fastening, after having fitted a nut having projection parts to a steel sheet by performing resistance welding, another sheet is fastened by a bolt. In this case, if peeling strength between the nut and the steel sheet is low, fracture occurs during use. Therefore, it is necessary to achieve satisfactory peeling strength. In addition, in the case of bolt fastening, since the fastening position is subjected to stress to maintain the rigidity of the entire automobile body at any time during use, there is a risk of delayed fracture (hydrogen embrittlement) due to hydrogen entering from the use environment.

Examples of a method in the related art for improving the peeling strength of a nut after projection welding has been performed include the methods disclosed in Patent Literature 1 and Patent Literature 2. Patent Literature 1 discloses a technique for improving peeling strength by controlling welding conditions. Patent Literature 2 discloses a technique for improving peeling strength by achieving satisfactory area of a region having high hardness.

### Citation List

### Patent Literature

PTL 1: Japanese Patent No. 5708350
PTL 2: Japanese Unexamined Patent Application Publication No. 2010-115678

Further related art may be found in JP 2019 173157 A which describes a hot-dip galvanized steel sheet and a method for manufacturing the same, in JP 2012 082890 A which describes a vehicle structural member with a welding nut part and a method for manufacturing the vehicle structural member and in WO 2015/127431 A1 which describes a process for welding weld nuts to high strength steel.

### Summary of Invention

### Technical Problem

By using any one of the above-described techniques in the related art, there is an increase in peeling strength. However, in the case of the techniques according to Patent Literature 1 and Patent Literature 2, there is a problem of a deterioration in delayed fracture resistance in a welded joint between a steel sheet and a nut.

In view of the situation described above, a problem regarding a projection welded joint between a high strength steel sheet and a nut to be solved by the present invention is improving peeling strength while achieving satisfactory delayed fracture resistance, and, as a means for solving the problem, the present invention provides a projection welded joint and a projection welding method.

Solution to Problem

The present invention is defined by the appended independent claims. The dependent claims describe optional features and distinct embodiments.

The present inventors diligently conducted investigations to solve the problem described above and, as a result, obtained the following knowledge. That is, it was found that, regarding a projection welded joint between a high strength steel sheet and a nut, the following are important for improving peeling strength while achieving satisfactory delayed fracture resistance.

(i) In a region in the welded joint in which hardness distribution is measured, a hardened region whose hardness is higher than that of a base metal zone extends continuously for a distance of 500 $\mu$m or more on each of the steel sheet side and the nut side with respect to the center of a weld metal zone (synonymous with nugget).
(ii) In such hardened regions, the maximum hardness in a weld heat affected zone on the nut side is higher than the maximum hardness in a weld heat affected zone on the steel sheet side.
(iii) A region where the maximum hardness in the weld heat affected zone on the steel sheet side exists is formed of a fine martensite microstructure.

Moreover, it was found that, to achieve items (i) to (iii) above, it is important that projection welding conditions be controlled to be within specified ranges while the chemical composition of the steel sheet is controlled to be within a specified range.

Advantageous Effects of Invention

According to the present invention, in a projection welded joint formed by joining a steel sheet (high strength steel sheet) having a significantly high tensile strength of 980 MPa or more and a nut by performing projection welding, it is possible to obtain a welded joint excellent in terms of both peeling strength and delayed fracture resistance after projection welding has been performed.

For example, in the case where, after having welded an M10 nut to a steel sheet, the welded body is immersed in hydrochloric acid while a load of $0.7 \times$ FS (FS: indentation peeling strength) is applied to the welded body via a bolt, the nut and the steel sheet are not separated; that is, it is possible to stably obtain a hot-pressed member having excellent delayed fracture resistance after the nut has been subjected to projection welding. Here, the expression "M10 nut" denotes a nut to be screwed together with a bolt having a thread part having a nominal diameter (maximum diameter or the outer diameter of a thread ridge) of 10 mm. Here, the expression "M$\bigcirc\bigcirc$" denotes the "nominal size of a screw" for a metric screw thread conforming to the prescription in JIS B 0205:2001 and consists of a combination of the character M and the maximum diameter of the thread part, that is, $\bigcirc\bigcirc$ mm.

In the present invention, the expression "excellent peeling strength" denotes a case where peeling strength FS, which is measured by performing an indentation peeling test in accordance with JIS B 1196:2001 as described in EXAMPLES below, is 9.0 kN or higher. In the present invention, the expression "excellent delayed fracture resistance" denotes a case where, when, as described in EXAMPLES below, a welded joint after projection welding has been performed is immersed in hydrochloric acid for 100 hours while the welded joint is subjected to a load of $0.7 \times$ FS via the bolt, the nut and the steel sheet are not separated.

Brief Description of Drawings

[Fig. 1] Fig. 1(a) to Fig. 1(c) are schematic diagrams illustrating the cross section and hardness distribution of a projection welded joint in an example of an embodiment of the present invention (in the case of a weld metal zone having a lump shape).
[Fig. 2] Fig. 2(a) to Fig. 2(c) are schematic diagrams illustrating the cross section and hardness distribution of a projection welded joint in another example of the embodiment of the present invention which differs from the one illustrated in Fig. 1(a) to Fig. 1(c) (in the case of a weld metal zone having a film shape).
[Fig. 3] Fig. 3 is a schematic diagram illustrating comparative example A in which the hardness distribution of a projection welded joint is beyond the range of the present invention.
[Fig. 4] Fig. 4 is a schematic diagram illustrating comparative example B in which the hardness distribution of a projection welded joint is beyond the range of the present invention.
[Fig. 5] Fig. 5 is a schematic diagram illustrating comparative example C in which the hardness distribution of a projection welded joint is beyond the range of the present invention.

[Fig. 6] Fig. 6 is a diagram illustrating the actual measurement data of the hardness distribution of sample No. 3 (example of the present invention) in EXAMPLES of the present invention.

[Fig. 7] Fig. 7 is a diagram illustrating the actual measurement data of the hardness distribution of sample No. 4 (example of the present invention) in EXAMPLES of the present invention.

[Fig. 8] Fig. 8 is a diagram illustrating the actual measurement data of the hardness distribution of sample No. 7 (comparative example) in EXAMPLES of the present invention.

[Fig. 9] Fig. 9 is a diagram illustrating the actual measurement data of the hardness distribution of sample No. 10 (comparative example) in EXAMPLES of the present invention.

[Fig. 10] Fig. 10 is a diagram illustrating the actual measurement data of the hardness distribution of sample No. 11 (comparative example) in EXAMPLES of the present invention.

[Fig. 11] Fig. 11 is a diagram illustrating the range of the welding condition E in the range of the present invention (E: 0.20 to 0.75) in a graph illustrating the relationship between the welding condition E and peeling strength FS in EXAMPLES of the present invention.

[Fig. 12] Fig. 12 is a schematic diagram illustrating the nut for welding used in EXAMPLES of the present invention, where Fig. 12(a) illustrates a back view of the nut, Fig. 12(b) and Fig. 12(c) illustrate side views of the nut, and Fig. 12 (d) illustrates a partially enlarged view of the projection part of the nut.

Description of Embodiments

The present invention is a welded joint formed by joining a steel sheet (high strength steel sheet) having a tensile strength of 980 MPa or higher and a nut by performing projection welding. Hereafter, an embodiment of the present invention will be described with reference to the figures.

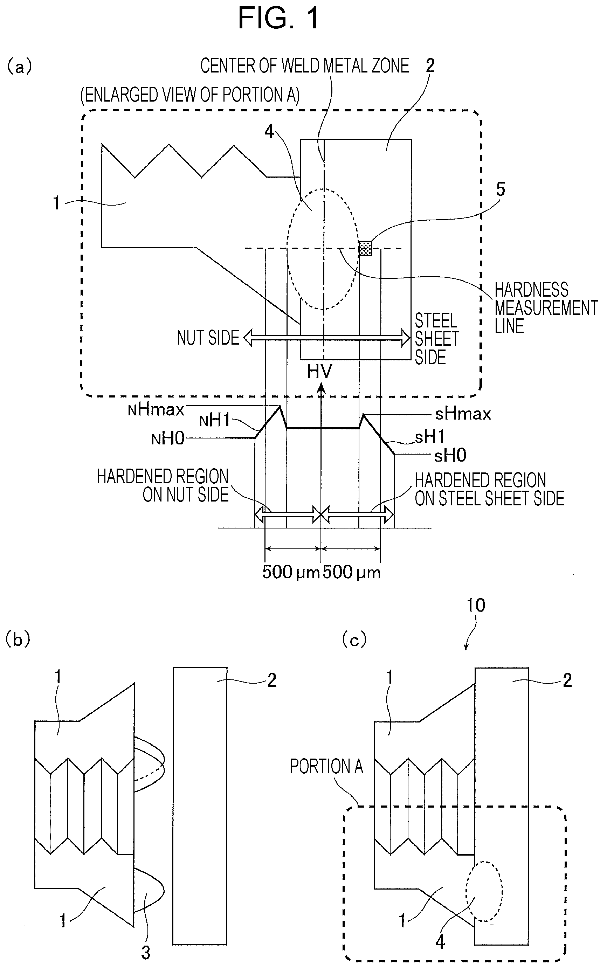

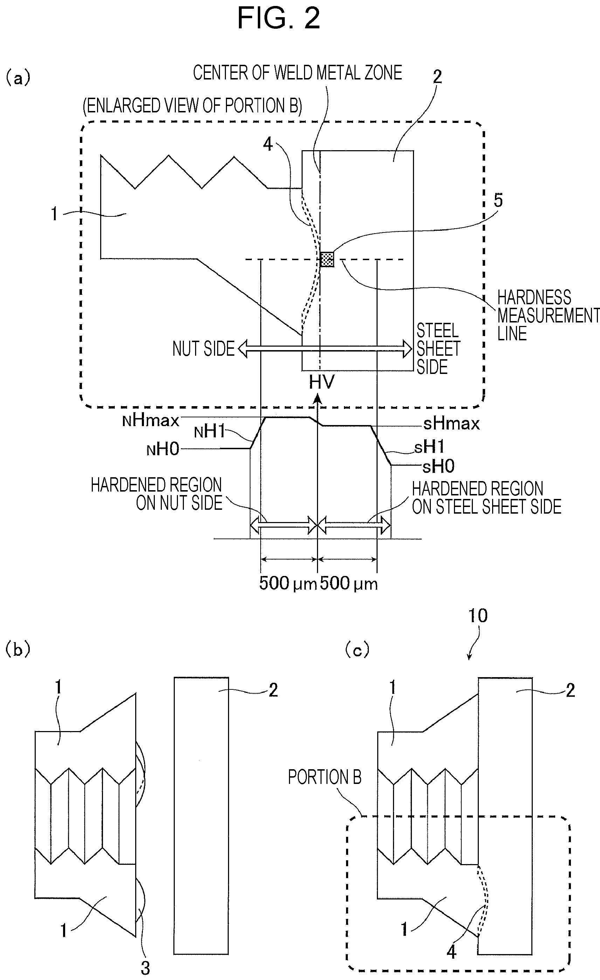

Figs. 1(a) to 1(c) are schematic diagrams illustrating, in the case of a weld metal zone 4 having a lump shape in the embodiment of the present invention, the cross section and an example of hardness distribution of a projection welded joint 10, and the front view of the welded joint. Figs. 2(a) to 2(c) are schematic diagrams illustrating, in the case of a weld metal zone 4 having a film shape in the embodiment of the present invention, the cross section and an example of hardness distribution of a projection welded joint 10, and the front view of the welded joint.

Fig. 1(a) and Fig. 2(a) are the enlarged cross-sectional views of the joined states of a nut 1 and a steel sheet 2, which are illustrated in the below-described Fig. 1(c) and Fig. 2(c), respectively (Fig. 1(a) is the enlarged view of portion A in Fig. 1(c), and Fig. 2(a) is the enlarged view of portion B in Fig. 2(c)), and hardness distribution graphs. Fig. 1(b) and Fig. 2(b) are front views illustrating the states before welding is performed to provide the states illustrated by the below-described Fig. 1(c) and Fig. 2(c), respectively. Fig. 1(c) and Fig. 2(c) are cross-sectional diagrams illustrating the joined states of a whole nut 1 and a steel sheet 2. Here, in these examples, the nut 1 before welding is performed has three projection parts 3 (protruding parts compressed to the steel sheet when welding is performed).

As in the case of such examples, in the present invention, it is necessary that, in the hardness distribution from the steel sheet 2 to the nut 1 through the weld metal zone 4, each of a hardened region which exists on the steel sheet 2 side with respect to the center of the weld metal zone 4 and whose hardness $_SH1$ is higher than the hardness $_SH0$ of the base metal of the steel sheet (that is, $_SH1 > _SH0$) and a hardened region which exists on the nut 1 side with respect to the center of the weld metal zone 4 and whose hardness $_NH1$ is higher than the hardness $_NH0$ of the nut base metal (that is, $_NH1 > _NH0$) extend continuously for a distance of 500 $\mu$m or more.

This is because, in the case where the continuously existing range of the hardened region on at least one of the steel sheet 2 side and the nut 1 side is less than 500 $\mu$m, it is not possible to achieve a satisfactory joined state at the interface between the steel sheet 2 and the nut 1 due to insufficient heat input, which results in insufficient peeling strength. Therefore, the continuously existing range of the hardened region described above is set to be 500 $\mu$m or more or preferably 600 $\mu$m or more. There is no particular limitation on the upper limit of the continuously existing range of the hardened region described above. It is preferable that the continuously existing range of the hardened region described above be 2000 $\mu$m or less or more preferably 1500 $\mu$m or less from the viewpoint of preventing burrs from occurring and deformation from occurring in the nut due to excessive heat input.

Here, in the present invention, a case of a peeling strength FS, which is measured by using the method described in EXAMPLES below, of 9.0 kN or higher is a case of excellent peeling strength.

Incidentally, the hardness is represented by Vickers hardness HV, and it is preferable that the hardness be measured under the measuring conditions of a testing force of 0.9807 N to 2.942 N and a measuring interval of 50 $\mu$m to 200 $\mu$m. Here, in the present invention, it is possible to measure the hardness by using the method described in EXAMPLES below.

Moreover, in the present invention, in the two hardened regions described above, it is necessary that the maximum hardness $_NHmax$ on the nut 1 side be higher than the maximum hardness $_SHmax$ on the steel sheet 2 side (that is, $_NHmax > _SHmax$).

This is because, even if the continuously existing ranges of the hardened regions on the steel sheet 2 side and on the nut 1 side are both 500 $\mu$m or more, in the case where $_N$Hmax is equal to or lower than $_S$Hmax, since a microstructure in the weld heat affected zone on the nut side fractures, the hardness of the microstructure on the nut side becomes the controlling factor of peeling strength, which results in insufficient peeling strength due to peeling strength being equal to or lower than the property of the high strength steel sheet. Therefore, the maximum hardness in the hardened region on the nut 1 side and the maximum hardness in the hardened region on the steel sheet 2 side should satisfy the relational expression $_N$Hmax > $_S$Hmax or preferably $_N$Hmax > 1.02 $\times$ $_S$Hmax. Here, it is preferable that the maximum hardness $_N$Hmax on the nut 1 side satisfy the relational expression 2.0 $\times$ $_S$Hmax $\geq$ $_N$Hmax from the viewpoint of preventing a deterioration in the toughness of the microstructure on the nut side.

Incidentally, the expression "maximum hardness" denotes the maximum hardness of a weld heat affected zone (HAZ). The HAZ (not illustrated) exists as a continuous region adjacent to the weld metal zone 4 (synonymous with nugget). The existing range of the HAZ includes the hardened region described above excluding the weld metal zone 4 described above, or, in the case where the HAZ does not include a softened region (region whose hardness is lower than that of the base metal), the existing range of the HAZ is identical to the hardened region described above excluding the weld metal zone 4 described above.

Moreover, in the present invention, it is necessary that a region 5 (which is also briefly referred to as "region where $_S$Hmax exists" hereinafter) which has the center thereof at the position corresponding to the maximum hardness $_S$Hmax on the steel sheet 2 side and which extends for a distance of 500 $\mu$m in a direction parallel to a joint interface (that is, parallel to the surface of the steel sheet 2) and a distance of 50 $\mu$m in a direction perpendicular to the joint interface (that is, parallel to the thickness direction of the steel sheet 2) be formed of a martensite microstructure having a prior austenite grain size of 20 $\mu$m or less.

In the examples illustrated in Fig. 1(a) and Fig. 2 (a), the expression "region 5 where $_S$Hmax exists" denotes the hatched square region in each of the figures. That is, the expression "region 5 where $_S$Hmax exists" denotes, when a rectangle having sides having respective lengths of 50 $\mu$m and 500 $\mu$m is arranged so that a side having a length of 50 $\mu$m is parallel to the thickness direction of the steel sheet 2 and a side having a length of 500 $\mu$m is parallel to the surface of the steel sheet 2 and so that the hardness measuring point corresponding to the maximum hardness $_S$Hmax is identical to the intersection of the diagonal lines of such a rectangle, a region surrounded by such a rectangle.

Even if the continuously existing ranges of the hardened regions on the steel sheet 2 side and on the nut 1 side are both 500 $\mu$m or more, and even if the relational expression $_N$Hmax > $_S$Hmax is satisfied, in the case where the region 5 where $_S$Hmax exists is formed of a microstructure (for example, bainite microstructure) which is different from a martensite microstructure, there is a decrease in hardness compared with the case of a martensite microstructure, which results in insufficient peeling strength.

Even if the continuously existing ranges of the hardened regions on the steel sheet 2 side and on the nut 1 side are both 500 $\mu$m or more, even if the relational expression $_N$Hmax > $_S$Hmax is satisfied, and even if the region 5 where $_S$Hmax exists is formed of a martensite microstructure, in the case where a prior austenite grain size in the region 5 where $_S$Hmax exists is more than 20 $\mu$m, there is an increase in hydrogen sensitivity, which results in a deterioration in delayed fracture resistance. Here, it is preferable that the prior austenite grain size in the region 5 where $_S$Hmax exists be 15 $\mu$m or less and 1 $\mu$m or more from the viewpoint of improving delayed fracture resistance and of the possibility of microstructure formation in the projection welding process of a nut.

That is, according to the present invention, by forming a projection welded joint between a high strength steel sheet and a nut, in which the continuously existing ranges of the hardened regions on the steel sheet side and on the nut side are both 500 $\mu$m or more, in which the relational expression $_N$Hmax > $_S$Hmax is satisfied, and in which a region 5 where $_S$Hmax exists is formed of a martensite microstructure having a prior austenite grain size of 20 $\mu$m or less, it is possible to improve peeling strength while achieving satisfactory delayed fracture resistance.

Incidentally, by decreasing welding heat input, the nut 1 and the steel sheet 2 are joined through a film-shaped weld metal zone 4 as illustrated in Fig. 2(a) to Fig. 2(c). Even in this case, according to the present invention, it is possible to improve peeling strength while achieving satisfactory delayed fracture resistance.

Here, the present invention may further have the features described below in addition to the features described above.

From the viewpoint of further improving peeling strength, it is preferable that, when the hardness of the base metal of the steel sheet is defined as $_S$H0, the hardness $_S$H1 on the steel sheet 2 side satisfy relational expression (1) below and that, when the hardness of the nut base metal is defined as $_N$H0, the hardness $_N$H1 on the nut 1 side satisfy relational expression (2) below. This is because, as a result of these relational expressions being satisfied, it is possible to identify the hardened regions due to the effect of a variation in the measured values of the base metal hardness being eliminated. It is more preferable that the relational expression $_S$H1 $\geq$ 1.2 $\times$ $_S$H0, in which the lower limit of the relational expression (1) is modified, be satisfied and that the relational expression $_N$H1 $\geq$ 1.2 $\times$ $_N$H0, in which the lower limit of the relational expression (2) is modified, be satisfied.

$$_sH1 \geq 1.1 \times {_sH0} \quad \cdots \quad (1)$$

$$_NH1 \geq 1.1 \times {_NH0} \quad \cdots \quad (2)$$

Here, from the viewpoint of achieving satisfactory toughness of a microstructure formed in the weld, it is preferable that the relational expression $2.0 \times {_sH0} \geq {_sH1}$, in which the upper limit of the relational expression (1) is set, be satisfied. For the similar reason, it is preferable that the relational expression $2.0 \times {_NH0} \geq {_NH1}$, in which the upper limit of the relational expression (2) is set, be satisfied.

In addition, similarly, from the viewpoint of further improving peeling strength, it is preferable that the maximum hardness $_NHmax$ in the weld heat affected zone on the nut 1 side and the maximum hardness $_sHmax$ in the weld heat affected zone on the steel sheet 2 side satisfy relational expression (3) below. This is because, as a result of this relational expression being satisfied, since the weld heat affected zone is broken on the high strength steel sheet side, high peeling strength is achieved due to the high strength property of the high strength steel sheet.

$$_NHmax \geq 1.02 \times {_sHmax} \quad \cdots \quad (3)$$

Here, from the viewpoint of achieving satisfactory toughness of a microstructure formed in the weld, it is preferable that the relational expression $2.0 \times {_sHmax} \geq {_NHmax}$, in which the upper limit of the relational expression (3) is set, be satisfied.

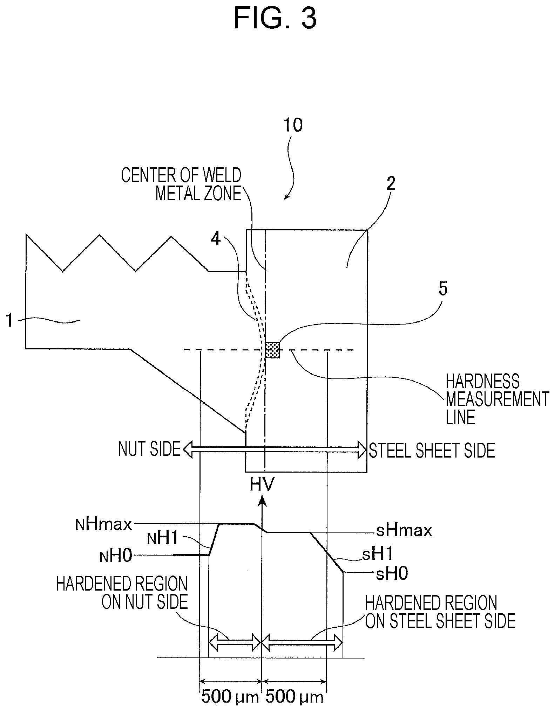

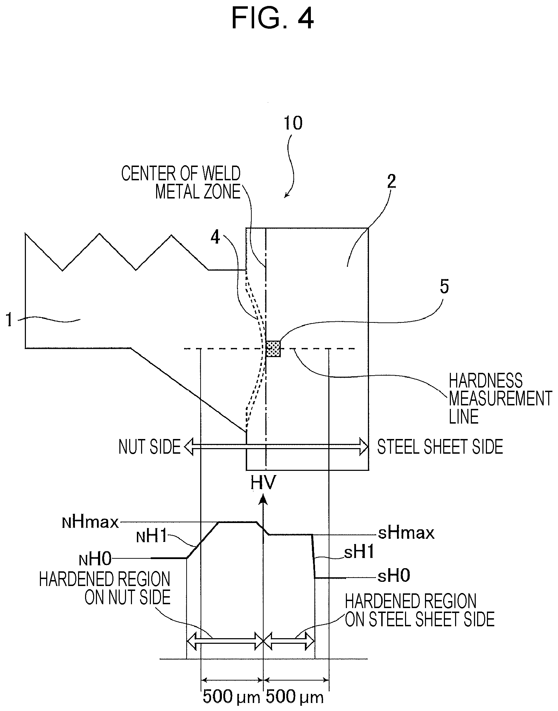

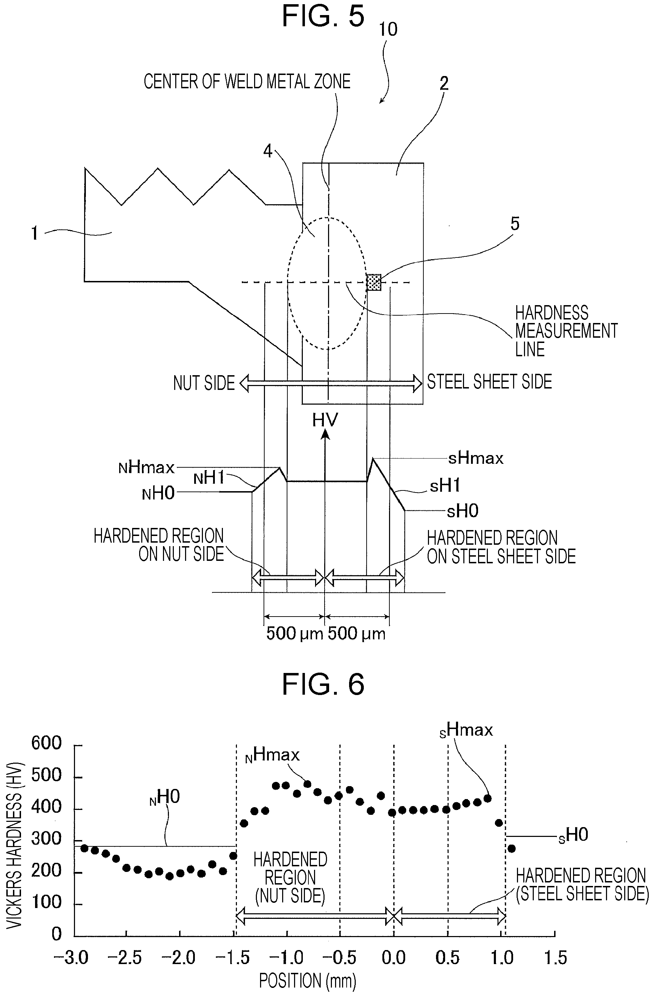

On the other hand, Fig. 3, Fig. 4, and Fig. 5 are schematic diagrams illustrating comparative examples A, B, and C, respectively, in which the hardness distribution in the case of a weld metal zone 4 having a film shape or a lump shape is beyond the range of the present invention. In the case of comparative example A and comparative example B, the maximum hardness $_NHmax$ on the nut 1 side is higher than the maximum hardness $_sHmax$ on the steel sheet 2 side. However, since the continuously existing range of the hardened region on the nut 1 side is less than 500 $\mu$m in the case of comparative example A (Fig. 3), and since the continuously existing range of the hardened region on the steel sheet 2 side is less than 500 $\mu$m in the case of comparative example B (Fig. 4), there is insufficient peeling strength in both cases, which makes it impossible to solve the problems described above. On the other hand, in the case of comparative example C (Fig. 5), the continuously existing range of each of the hardened regions on the nut 1 side and on the steel sheet 2 side is 500 $\mu$m or more. However, since the maximum hardness $_NHmax$ on the nut 1 side is equal to or lower than the maximum hardness $_sHmax$ on the steel sheet 2 side ($_NHmax \leq {_sHmax}$), there is insufficient peeling strength, which makes it impossible to solve the problems described above.

Incidentally, it is preferable that the thickness of the steel sheet 2 used in the present invention be within the thickness range of a steel sheet having a high demand as an automobile steel sheet. Examples of such a thickness range include a range of 0.4 mm to 3.2 mm.

Hereafter, the chemical composition of the steel sheet 2 used in the present invention will be described.

This chemical composition is not only preferable as the chemical composition of a high strength cold rolled steel sheet having a TS of 980 MPa class or above but also necessary for, regarding a projection welded joint, improving the peeling strength while achieving delayed fracture resistance. Hereafter, **"%"** used when describing a chemical composition denotes "mass%".

C: 0.08% or more and 0.20% or less

C is an element which is effective for increasing the strength of a steel sheet. Moreover, C is an element which forms Ti- or Nb-based precipitates, which are important in the present invention. However, in the case where the C content is less than 0.08%, it is difficult to achieve satisfactory strength of a steel sheet. Therefore, the C content is set to be 0.08% or more. It is preferable that the C content be 0.10% or more. On the other hand, in the case where C is excessively contained, that is, the C content is more than 0.20%, since there is a marked increase in the hardness of a HAZ on the steel sheet side after projection welding has been performed, there is a deterioration in delayed fracture resistance. Therefore, the C content is set to be 0.20% or less. It is preferable that the C content be 0.18% or less.

Si: 0.2% or more and 1.6% or less

Since Si is effective for alleviating the distribution of hardness in the thickness direction of a steel sheet by alleviating the segregation of Mn, Si improves delayed fracture resistance after projection welding has been performed. To obtain such an effect, it is necessary that the Si content be 0.2% or more. It is preferable that the Si content be 0.3% or more. However, since there is a deterioration in chemical convertibility in the case where the Si content is excessively high, the Si content is set to be 1.6% or less. It is preferable that the Si content be 1.3% or less.

Mn: 1.0% or more and 3.4% or less

Mn contributes to increasing strength through solid solution strengthening and the formation of a second phase. In addition, Mn is an element which is necessary for stabilizing austenite to control a second phase fraction. To obtain such effects, it is necessary that the Mn content be 1.0% or more. On the other hand, in the case where the Mn content is excessively high, when hydrogen enters a steel sheet through an interface between a weld metal zone and a weld heat affected zone after projection welding has been performed, since there is an increase in sliding constraint at grain boundaries, a crack tends to grow at grain boundaries. As a result, there is a deterioration in delayed fracture resistance after projection welding has been performed. Therefore, the Mn content is set to be 3.4% or less. It is preferable that the Mn content be 3.2% or less.

P: 0.05% or less

In the case where the P content is excessively high, since inter granular embrittlement occurs due to segregation at grain boundaries becoming marked, there is a deterioration in delayed fracture resistance after projection welding has been performed. Therefore, the P content is set to be 0.05% or less. It is preferable that the P content be 0.03% or less. Here, although there is no particular limitation on the lower limit of the P content, since there is an increase in steel making costs in the case where an attempt is made to achieve ultra-low P content, it is preferable that the P content be 0.005% or more.

S: 0.01% or less

In the case where the S content is high, since large amounts of sulfides such as MnS are formed, there is a deterioration in delayed fracture resistance after projection welding has been performed due to MnS becoming a starting point at which a crack is generated at the time of hydrogen entry. Therefore, the upper limit of the S content is set to be 0.01%. It is preferable that the S content be 0.003% or less. Here, although there is no particular limitation on the lower limit of the S content, since there is an increase in steel making costs in the case where an attempt is made to achieve ultra-low S content, it is preferable that the S content be 0.0002% or more.

Al: 0.01% or more and 0.10% or less

Al is an element which is necessary for deoxidization, and it is necessary that the Al content be 0.01% or more to obtain such an effect. On the other hand, since Al causes the formation of an excessive amount of ferrite phase after projection welding has been performed, it is difficult to achieve satisfactory peeling strength. Therefore, the upper limit of the Al content is set to be 0.10%. It is preferable that the Al content be 0.05% or less.

N: 0.01% or less

Since N causes a deterioration in delayed fracture resistance after projection welding has been performed by forming coarse nitrides, it is necessary that the N content be as low as possible. Since there is a marked tendency for forming coarse nitrides in the case where the N content is more than 0.01%, the N content is set to be 0.01% or less. It is preferable that the N content be 0.0075% or less. It is preferable that the N content be 0.0001% or more.
In the present invention, it is necessary that Nb and/or Ti be added in the amounts described below in addition to the constituents described above.

Nb: 0.005% or more and 0.050% or less

Since Nb forms fine carbonitrides, Nb improves delayed fracture resistance after projection welding has been performed by decreasing the sizes of hydrogen trap sites and prior austenite grains. To obtain such an effect, the Nb content is set to be 0.005% or more. On the other hand, in the case where the Nb content is high, there is a marked deterioration in the ductility of a base metal, and slab cracking occurs after a continuous casting process. Therefore, the Nb content is set to be 0.050% or less. It is preferable that the Nb content be 0.045% or less or more preferably 0.040% or less.

Ti: 0.005% or more and 0.050% or less

Since Ti, like Nb, also forms carbonitrides, Ti improves delayed fracture resistance after projection welding has been performed by decreasing the sizes of hydrogen trap sites and prior austenite grains. To obtain such an effect, the Ti content is set to be 0.005% or more. It is preferable that the Ti content be 0.008% or more. On the other hand, since there is a marked deterioration in the ductility of a base metal in the case where the Ti content is high, the Ti content is set to be 0.050% or less. It is preferable that the Ti content be 0.045% or less.

In the present invention, one, two, or more of the constituents described below may be added as needed in addition to the constituents described above.

B: 0.0050% or less

Since B is effective for inhibiting the formation of ferrite and pearlite after projection welding has been performed by improving hardenability, B contributes to improving peeling strength. To obtain such an effect, it is preferable that the B content be 0.0002% or more. On the other hand, since such an effect becomes saturated in the case where the B content is more than 0.0050%, it is preferable that the B content be 0.0050% or less.

Cr: 0.50% or less

Cr is an element which contributes to increasing strength by forming a second phase. To obtain such an effect, it is preferable that the Cr content be 0.05% or more. On the other hand, since a plane defect tends to occur due to an excessive amount of martensite being formed in the case where the Cr content is more than 0.50%, it is preferable the Cr content be 0.50% or less. It is more preferable that the Cr content be 0.45% or less.

Mo: 0.50% or less

Mo is, like Cr, also an element which contributes to increasing strength by forming a second phase. Moreover, Mo is an element which contributes to improving delayed fracture resistance after projection welding has been performed by increasing hydrogen overpotential. In addition, Mo is an element which contributes to increasing strength by partially forming carbides. To obtain such effects, it is preferable that the Mo content be 0.05% or more. It is more preferable that the Mo content be 0.10% or more. In addition, in the case where the Mo content is more than 0.50%, such effects become saturated, and there is only an increase in cost. Therefore, it is preferable that the Mo content be 0.50% or less. It is more preferable that the Mo content be 0.32% or less.

Co: 0.50% or less

Co is, like Mo, also an element which contributes to improving delayed fracture resistance after projection welding has been performed by increasing hydrogen overpotential. To obtain such an effect, it is preferable that the Co content be 0.05% or more or more preferably 0.10% or more. On the other hand, in the case where the Co content is more than 0.50%, such an effect becomes saturated, and there is only an increase in cost. Therefore, it is preferable that the Co content be 0.50% or less. It is more preferable that the Co content be 0.32% or less.

V: 0.05% or less

V may contribute to increasing strength by forming fine carbonitrides. To obtain such an effect, it is preferable that the V content be 0.005% or more. On the other hand, in the case where the V content is high and more than 0.05%, there is only a little increase in the effect of increasing strength in relation to an increase in the V content, and there is an increase in alloy cost. Therefore, it is preferable that the V content be 0.05% or less.

Cu: 0.50% or less

Cu is an element which contributes to improving delayed fracture resistance after projection welding has been performed by increasing hydrogen overpotential. To obtain such an effect, it is preferable that the Cu content be 0.005% or more. On the other hand, in the case where the Cu content is more than 0.50%, such an effect becomes saturated, and a surface defect tends to occur due to Cu. Therefore, it is preferable that the Cu content be 0.50% or less.

Ni: 0.50% or less

Ni is, like Cu, also an element which contributes to improving delayed fracture resistance after projection welding has been performed by increasing hydrogen overpotential. To obtain such an effect, it is preferable that the Ni content be 0.005% or more. In addition, since Ni is effective for inhibiting a surface defect due to Cu from occurring in the case where Ni is added in combination with Cu, Ni is effective in the case where Cu is added. On the other hand, since such effects become saturated in the case where the Ni content is more than 0.50%, it is preferable that the Ni content be 0.50% or less.

Sb: 0.020% or less

Since Sb is effective for inhibiting the formation of a decarburized layer in the surface layer of a steel sheet, an electric potential distribution on the steel sheet surface becomes uniform in an aqueous solution, which results in an improvement in delayed fracture resistance after projection welding has been performed. To obtain such an effect, it is preferable that the Sb content be 0.001% or more. On the other hand, in the case where the Sb content is more than 0.020%, since there is an increase in rolling load, there is a deterioration in productivity. Therefore, it is preferable that the Sb content be 0.020% or less.

Ca and/or REM: 0.0050% or less

Ca and REM (rare earth metals), which are elements which contribute to improving delayed fracture resistance after projection welding has been performed through the spheroidization of sulfides, may be added as needed. To obtain such an effect, it is preferable that the content be 0.0005% or more in the case where one of such elements is separately added and that the total content be 0.0005% or more in the case where such elements are added in combination. On the other hand, in the case where the total content of Ca and REM is more than 0.0050%, such effect becomes saturated. Therefore, it is preferable that the content be 0.0050% or less in the case where one of such elements is separately added and that the total content be 0.0050% or less in the case where such elements are added in combination.

The balance of the chemical composition which differs from the constituents described above is Fe and incidental impurities. Examples of the incidental impurities include Sn, Zn, and the like, and it is acceptable that the Sn content be 0.01% or less and that the Zn content be 0.01% or less.

In addition, in the case where Ta, Mg, and Zr are added within respective ranges for an ordinary steel chemical composition, there is no decrease in the effects of the present invention. The acceptable content of each of such elements is 0.01% or less.

In addition, the nut 1 used in the present invention is a nut made of a steel grade having an equivalent carbon content of 0.20% or more, and examples of such a steel grade include S25C (JIS G 4051), SNC815 (JIS G 4102), SNCM630 (JIS G 4103), and SCM440 (JIS G 4105). The equivalent carbon content is calculated by using equation (5) below (JIS G 0203).

$$\text{equivalent carbon content (\%)} = C + Mn/6 + Si/24 + Ni/40 + Cr/5 + Mo/4 + V/14 \qquad (5)$$

Here, the steel sheet 2 used in the present invention may have a Zn-based coating layer (zinc-based coating layer) on the surface thereof as long as the chemical composition of the steel sheet is within the range of the chemical composition of a steel sheet described above. Examples of a steel sheet having a Zn-based coating layer on the surface thereof include a galvanized steel sheet, a galvannealed steel sheet, and an electro-galvanized steel sheet. Here, the Zn-based coating layer may exist on one side of the steel sheet or on both sides of the steel sheet.

Hereafter, the projection welding method according to the present invention will be described.

The projection welding method according to the present invention is a projection welding method for joining the steel sheet 2 and the nut 1 used in the present invention by performing projection welding, that is, resistance welding, in which the steel sheet and the nut are clamped, pressurized, and energized between a pair of electrodes. Specifically, it is important that welding conditions are set such that the tensile strength M (MPa) of the steel sheet and the energizing time T (s) of the resistance welding, average welding current K (kA), and pressurizing force F (N) satisfy relational expression (4) below.

$$0.20 \leq ((T \times K)/4) \times (M/F)^{1/2} \leq 0.75 \qquad \cdots \quad (4)$$

For example, regarding the preferable ranges of the energizing time T (s) of the resistance welding, average welding current K (kA), and pressurizing force F (N), it is preferable that the energizing time T be 0.10 s to 0.50 s, that the average welding current K be 5 kA to 20 kA, and that the pressurizing force F be 3000 N to 6000 N.

Here, in relational expression (4), E (expressed in units of s·kA·mm$^{-1}$) is defined by the equation E = ((T × K)/4) × (M/F)$^{1/2}$. This E is also regarded as one of the welding condition factors. In the case where E is less than 0.20, there is a decrease in the area of a region in which the temperature is higher than the $A_1$ transformation temperature of the steel sheet so that austenite is formed when joining is performed. As a result, since the continuously existing range of the hardened region described above becomes less than 500 μm on at least one of the steel sheet 2 side and the nut 1 side, there is a deterioration in peeling strength after projection welding has been performed. It is more preferable that E be 0.25 or more.

In addition, in the case where E is more than 0.75, since there is a decrease in cooling rate due to an increase in the amount of heat input, the formation of martensite is inhibited. As a result, since the continuously existing range of the hardened region described above becomes less than 500 $\mu$m on at least one of the steel sheet 2 side and the nut 1 side, there is a deterioration in peeling strength after projection welding has been performed. In addition, as a result of holding being performed for a long time in a high temperature range, austenite grains grow. Consequently, since a prior austenite grain size becomes more than 20 $\mu$m in the region 5 where the maximum hardness $_sHmax$ on the steel sheet 2 side exists, there is a deterioration in delayed fracture resistance after projection welding has been performed. It is preferable that E be 0.70 or less.

EXAMPLES

Hereafter, the embodiment of the present invention will be described more specifically in accordance with examples.

However, obviously, the present invention is not limited to the examples described below, and the present invention may be implemented by appropriately making alterations within a range in accordance with the intent of the present invention. Such examples performed in such a way are all within the technical range of the present invention.

After having prepared molten steels having the chemical compositions given in Table 1 and having performed continuous casting to obtain slabs, hot rolling was performed. After having performed pickling followed by cold rolling on the obtained hot rolled steel sheets to obtain cold rolled sheets (having a thickness of 1.4 mm), annealing was performed to manufacture cold rolled steel sheets. In addition, some of the cold rolled steel sheets (steel sheets denoted by sample No. B in Table 2) were made into galvanized steel sheets.

After having taken a JIS No. 5 tensile test specimen so that the tensile direction was a direction perpendicular to the rolling direction from each of the manufactured steel sheets (i.e., cold rolled steel sheet or galvanized steel sheet), a tensile test was performed (in accordance with JIS Z 2241:1998) to measure tensile strength. The measured results of tensile strength are denoted by M and given in Table 2. In the case of all the steel sheets, the tensile strength was 980 MPa or higher.

In addition, the peeling strength and delayed fracture resistance after projection welding had been performed were evaluated as described below.

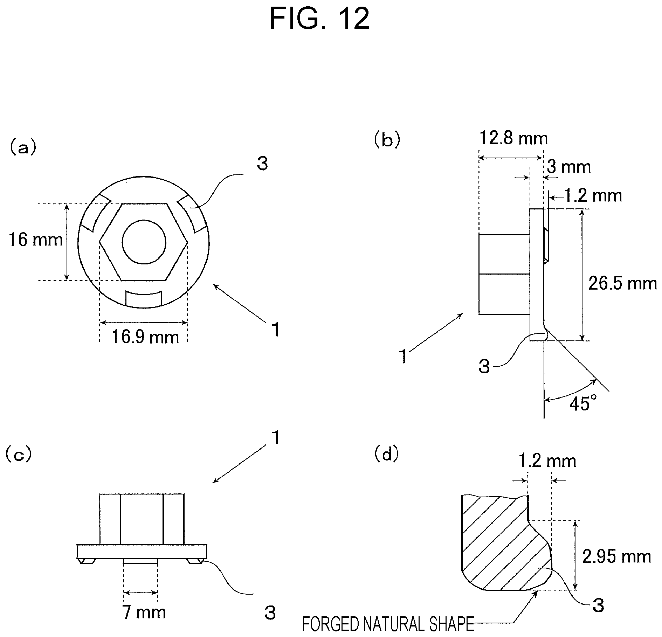

First, by joining a steel sheet and a nut by performing projection welding, a test specimen (welded body) having a projection weld was manufactured (refer to Fig. 1(c) and Fig. 2(c)). Specifically, a steel sheet test specimen having a size of 50 mm $\times$ 150 mm was taken from each of the obtained steel sheets, and a hole having a diameter of 11 mm was punched at the center of the steel sheet test specimen. In addition, an M10 nut for welding having three projection parts was prepared. Fig. 12(a) to Fig. 12(d) are schematic diagrams illustrating this nut for welding, where Fig. 12(a) illustrates the back view of the nut, Fig. 12(b) illustrates the side view of the nut, Fig. 12(c) illustrates the side view of the nut viewed in a direction different from that of Fig. 12(b), and Fig. 12 (d) illustrates the cross-sectional view of the projection part of the nut. The steel sheet test specimen and the nut for welding were set on an alternating-current welding machine so that the center of the hole of the steel sheet and the center of the hole of the nut coincided with each other and joined under the welding conditions given in Table 2. The steel grade of the M10 nut for welding described above was S25C (JIS G 4051). The hardness $_NH0$ of the nut base metal was about 275 HV. As illustrated in Fig. 12(a) to Fig. 12(d), the projection parts 3 were arranged at three positions at equal intervals along the outer circumference of the circular seating surface, and, regarding the shape of the projection part 3 along the outer circumference of the circular seating surface, the projection part 3 had a length of 7 mm, a width of 2.95 mm, and a height of 1.2 mm. The projection part had a height of 1.2 mm and an inclination angle of 45°.

Regarding the resistance welding conditions, welding was performed by using a resistance welding machine of a single-phase alternating-current type (50 Hz) having a welding gun with a servomotor pressurizing system to manufacture the test specimen (welded body) having a projection weld. Here, a pair of the used electrode chips were flat electrodes having a diameter of 30 mm$\phi$.

By fixing a bolt to the hole of the nut of the welded body prepared as described above, a bolt fastening test specimen was prepared. Subsequently, by performing an indentation peeling test in accordance with JIS B 1196:2001 on the obtained bolt fastening test specimen, a load with which the nut was separated from the steel sheet was measured. The measured value of such load was defined as the peeling strength FS. The peeling strength FS measured as described above is given in Table 3.

In the present invention, a case of a peeling strength FS of 9.0 kN or higher is evaluated as a case of excellent peeling strength, and a case of a peeling strength FS of less than 9.0 kN is evaluated as a case of poor peeling strength.

Delayed fracture resistance was evaluated by manufacturing the bolt fastening test specimen by using the same method as described above. When the peeling strength is defined as FS, a load of 0.7 $\times$ FS was applied to the bolt fastening test specimen. Subsequently, by immersing the bolt fastening test specimen in hydrochloric acid solution (pH = 1.5) at room temperature, whether or not the nut was separated from the steel sheet was evaluated. A case where separation did not occur for 100 hours or more was evaluated as a case of good delayed fracture resistance (denoted by symbol "○"), and a case where separation occurred in less than 100 hours was evaluated as a case of poor delayed fracture resistance (denoted by symbol "×"). The evaluation results of delayed fracture resistance obtained as described above are given in Table 3.

A test for measuring hardness and a test for measuring a prior austenite grain size were performed on a test specimen having a measurement surface which is the cross section of the joined surface as exemplified in Fig. 1(a).

In a test for measuring hardness, as illustrated in Fig. 1(a), Vickers hardness (HV) was measured in a region from the base metal zone on the nut side (i.e., nut base metal) to the base metal zone on the steel sheet side (i.e., base metal of steel sheet). At this time, measurement was performed under the measurement conditions of a testing force of 0.9807 N and a measurement interval of 0.1 mm.

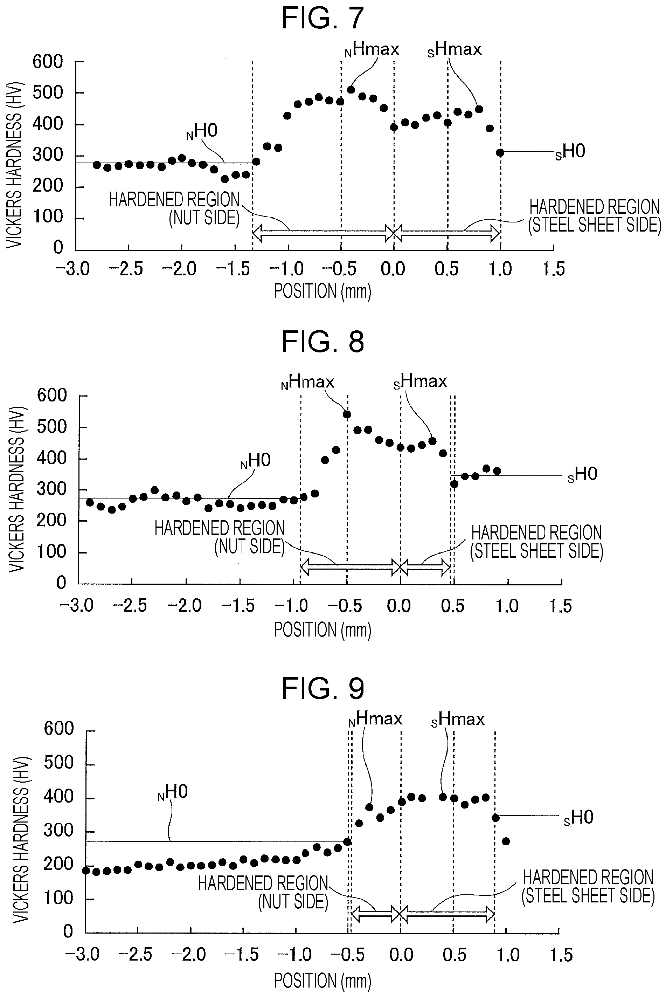

The examples of the hardness distribution obtained by a test for measuring hardness are illustrated in Fig. 6 to Fig. 10. The actual measurement data of the hardness distribution of sample Nos. 3 and 4, which are the examples of the present invention, are illustrated in Fig. 6 and Fig. 7, respectively, and the actual measurement data of the hardness distribution of sample Nos. 7, 10, and 11, which are the comparative examples, are illustrated in Fig. 8, Fig. 9, and Fig. 10, respectively.

As illustrated in Fig. 6 to Fig. 10, the vertical axis represents Vickers hardness (HV), and the horizontal axis represents a position (mm) from the joint interface of the weld metal zone. When the joint interface is located at a position of 0.0 mm, the region of the steel sheet is on the plus side, and the region of the nut is on the minus side. The maximum hardness in the hardened region on the nut side is "the maximum hardness $_NHmax$ on the nut side", and the maximum hardness in the hardened region on the steel sheet side is "the maximum hardness $_SHmax$ on the steel sheet side". A continuous region which exists on the steel sheet side with respect to the center of the weld metal zone and whose hardness $_SH1$ is higher than the hardness $_SH0$ of the base metal of the steel sheet is "the hardened region on the steel sheet side". A continuous region which exists on the nut side with respect to the center of the weld metal zone and whose hardness $_NH1$ is higher than the hardness $_NH0$ of the nut base metal is "the hardened region on the nut side".

Regarding other sample numbers, the actual measurement data of a hardness distribution were obtained as in the case of the examples described above. In addition, from such actual measurement data of a hardness distribution, the maximum hardness $_NHmax$ on the nut side, the maximum hardness $_SHmax$ on the steel sheet side, the hardness $_NH0$ of the nut base metal, and the hardness $_SH0$ of the base metal of the steel sheet were derived, and the hardness ratio (= $_NHmax/_SHmax$), the hardened region (on the nut side), and the hardened region (on the steel sheet side) were also derived. Moreover, a region in which the hardness $_SH1$ on the steel sheet side satisfied relational expression (1) above and a region in which the hardness $_NH1$ on the nut side satisfied relational expression (2) above were derived. These results are given in Table 3. Here, the hardness $_NH0$ of the nut base metal and the hardness $_SH0$ of the base metal of the steel sheet are the hardness before welding was performed.

A test for measuring a prior austenite grain size was performed as described below. In this test, whether or not the region 5 where $_SHmax$ existed was formed of a martensite microstructure having a prior austenite grain size of 20 $\mu m$ or less was evaluated.

After having polished a measurement surface, the polished measurement surface was etched in an etching solution composed of a picric acid saturated aqueous solution to expose prior austenite grain boundaries, the image data of the region 5 where $_SHmax$ existed (refer to Fig. 1(a)) was taken at a magnification of 1500 times. The prior austenite grain size was derived from the obtained image data by using an intercept method, that is, under a condition in which a testing line intersected with 20 or more of prior austenite grains, a value obtained by dividing the entire length of the testing line by the total number of such grains with which the testing line intersected was defined as the prior austenite grain size. The prior austenite grain sizes derived as described above are given in Table 3.

Incidentally, in the hardened region on the steel sheet side, the prior austenite grain size was similarly measured by using the method described above at three positions whose hardness was less than $_SHmax$ and equal to or higher than ($_SHmax \times 0.8$), and the measured values were smaller than that measured in the region where $_SHmax$ existed.

As indicated in Table 3, it is clarified that, sample numbers (examples of the present invention) which satisfied the range of the present invention are superior to sample numbers (comparative examples) which did not satisfy the range of the present invention in terms of both peeling strength and delayed fracture resistance.

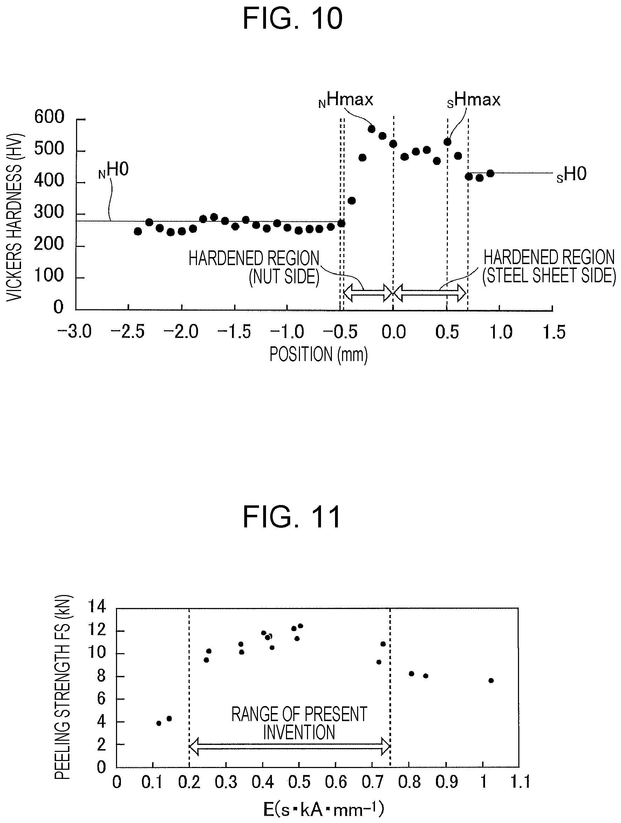

Incidentally, Fig. 11 is a diagram illustrating the range of the welding condition E in the range of the present invention (E: 0.20 to 0.75) in a graph illustrating the relationship between the welding condition E and peeling strength FS, in which the peeling strength FS given in Table 3 is plotted against the welding condition E given in Table 2. As indicated in Fig. 11, it is clarified that there is a marked decrease in peeling strength FS in the case where E is out of the range of the present invention.

In addition, as indicated in Table 3, it is clarified that, in the case of sample No. 6, that is, the comparative example, since the prior austenite grain size (in detail, the prior austenite grain size in a region which has the center thereof at the position corresponding to the maximum hardness $_SHmax$ and which extends for a distance of 500 $\mu m$ in a direction parallel to the surface of the steel sheet 2 and a distance of 50 $\mu m$ in a direction parallel to the thickness direction of the steel sheet 2) was more than 20 $\mu m$, delayed fracture resistance was poor (symbol: ×).

[Table 1]

| Steel Grade | Chemical Composition (mass%) | | | | | | | | | | Note |
|---|---|---|---|---|---|---|---|---|---|---|---|
| | C | Si | Mn | P | S | Al | N | Nb | Ti | Others | |
| A | 0.11 | 0.65 | 2.31 | 0.01 | 0.001 | 0.03 | 0.002 | 0.006 | 0.031 | B: 0.003, Mo: 0.19, V: 0.02 | Example Steel |
| B | 0.13 | 1.26 | 1.66 | 0.01 | 0.001 | 0.03 | 0.002 | 0.015 | 0.043 | Cr: 0.16, Sb: 0.003 | Example Steel |
| C | 0.10 | 0.35 | 1.82 | 0.01 | 0.001 | 0.02 | 0.003 | 0.032 | 0.015 | Cu: 0.15, Ni: 0.21, Co: 0.05 | Example Steel |
| D | 0.18 | 0.70 | 3.01 | 0.01 | 0.001 | 0.02 | 0.002 | 0.022 | 0.025 | V: 0.03, Ca: 0.001 | Example Steel |
| E | 0.16 | 0.65 | 1.94 | 0.02 | 0.001 | 0.03 | 0.003 | - | - | - | Comparative Steel |
| F | 0.15 | 0.81 | 2.64 | 0.01 | 0.001 | 0.03 | 0.003 | 0.021 | 0.023 | - | Example Steel |
| G | 0.09 | 0.50 | 2.78 | 0.02 | 0.002 | 0.02 | 0.003 | 0.034 | - | - | Example Steel |
| H | 0.13 | 1.10 | 1.90 | 0.02 | 0.001 | 0.03 | 0.002 | - | 0.031 | - | Example Steel |
| I | 0.16 | 0.76 | 2.28 | 0.01 | 0.001 | 0.03 | 0.030 | 0.008 | 0.016 | REM: 0.002 | Example Steel |

[Table 2]

| Sample No. | Steel Grade | Welding Condition | | | | | Note |
|---|---|---|---|---|---|---|---|
| | | Resistance Welding Energizing Time T | Steel Sheet Tensile Strength M | Average Welding Current K | Pressurizing Force F | E* | |
| | | s | MPa | kA | N | s·kA·mm$^{-1}$ | |
| 1 | A | 0.24 | 1180 | 16.0 | 6000 | 0.43 | Example |
| 2 | A | 0.44 | 1180 | 15.0 | 6000 | 0.73 | Example |
| 3 | B | 0.32 | 980 | 14.0 | 5000 | 0.50 | Example |
| 4 | C | 0.28 | 980 | 12.0 | 4000 | 0.42 | Example |
| 5 | D | 0.22 | 1470 | 18.0 | 6000 | 0.49 | Example |
| 6 | E | 0.22 | 1180 | 12.0 | 4500 | 0.34 | Comparative Example |
| 7 | A | 0.10 | 1180 | 12.0 | 5500 | 0.14 | Comparative Example |

(continued)

| Sample No. | Steel Grade | Welding Condition | | | | | Note |
| --- | --- | --- | --- | --- | --- | --- | --- |
| | | Resistance Welding Energizing Time T | Steel Sheet Tensile Strength M | Average Welding Current K | Pressurizing Force F | E* | |
| | | s | MPa | kA | N | s·kA·mm⁻¹ | |
| 8 | A | 0.44 | 1180 | 20.0 | 5500 | 1.02 | Comparative Example |
| 9 | A | 0.38 | 1180 | 20.0 | 6000 | 0.84 | Comparative Example |
| 10 | A | 0.50 | 1180 | 14.5 | 6000 | 0.80 | Comparative Example |
| 11 | D | 0.06 | 1470 | 15.0 | 6000 | 0.11 | Comparative Example |
| 12 | C | 0.18 | 980 | 14.0 | 6000 | 0.25 | Example |
| 13 | F | 0.26 | 1180 | 14.0 | 6000 | 0.40 | Example |
| 14 | G | 0.18 | 980 | 16.0 | 4500 | 0.34 | Example |
| 15 | H | 0.22 | 980 | 17.0 | 5000 | 0.41 | Example |
| 16 | I | 0.30 | 1470 | 13.0 | 6000 | 0.48 | Example |
| 17 | A | 0.50 | 1180 | 13.0 | 6000 | 0.72 | Example |
| 18 | C | 0.16 | 980 | 14.0 | 5000 | 0.25 | Example |

*$E = ((T \times K)/4) \times (M/F)^{1/2}$

[Table 3]

| Sample No. | Prior Austenite Grain Size (μm) | Steel Sheet Base Metal Hardness sH0 (HV) | Nut Base Metal Hardness NH0 (HV) | Maximum Hardness on Steel Sheet Side sHmax (HV) | Maximum Hardness on Nut Side NHmax (HV) | Hardness Ratio* (-) | Hardened Region (on Steel Sheet Side) (μm) | Hardened Region (on Nut Side) (μm) | Region Where sH1 ≥ 1.1 × sH0 Is Satisfied (on Steel Sheet Side) (μm) | Region Where NH1 ≥ 1.1 × NH0 Is Satisfied (on Nut Side) (μm) | Peeling Strength FS (kN) | Delayed Fracture Resistance | Note |
|---|---|---|---|---|---|---|---|---|---|---|---|---|---|
| 1 | 12 | 348 | 275 | 449 | 508 | 1.13 | 980 | 1360 | 800 | 1300 | 10.5 | ○ | Example |
| 2 | 18 | 348 | 275 | 428 | 441 | 1.03 | 960 | 540 | 720 | 520 | 10.9 | ○ | Example |
| 3 | 10 | 317 | 275 | 436 | 479 | 1.10 | 1050 | 1480 | 1010 | 1450 | 12.3 | ○ | Example |
| 4 | 12 | 309 | 275 | 449 | 511 | 1.14 | 1000 | 1320 | 960 | 1260 | 11.5 | ○ | Example |
| 5 | 8 | 430 | 275 | 495 | 529 | 1.07 | 720 | 1100 | 580 | 1060 | 11.3 | ○ | Example |
| 6 | 21 | 394 | 275 | 476 | 519 | 1.09 | 660 | 760 | 520 | 740 | 10.1 | × | Comparative Example |
| 7 | 8 | 348 | 275 | 456 | 545 | 1.20 | 470 | 930 | 440 | 790 | 4.3 | ○ | Comparative Example |
| 8 | 21 | 348 | 275 | 411 | 343 | 0.83 | 880 | 340 | 640 | 320 | 7.6 | × | Comparative Example |
| 9 | 21 | 348 | 275 | 402 | 354 | 0.88 | 920 | 400 | 740 | 380 | 8.1 | × | Comparative Example |
| 10 | 21 | 348 | 275 | 406 | 376 | 0.93 | 900 | 490 | 840 | 450 | 8.3 | × | Comparative Example |
| 11 | 8 | 430 | 275 | 530 | 571 | 1.08 | 700 | 490 | 630 | 460 | 3.9 | ○ | Comparative Example |
| 12 | 12 | 309 | 275 | 443 | 527 | 1.19 | 700 | 790 | 520 | 750 | 10.2 | ○ | Example |
| 13 | 12 | 393 | 275 | 467 | 506 | 1.08 | 1040 | 1300 | 800 | 1220 | 11.8 | ○ | Example |
| 14 | 14 | 323 | 275 | 411 | 515 | 1.25 | 900 | 780 | 680 | 760 | 10.8 | ○ | Example |
| 15 | 13 | 330 | 275 | 419 | 502 | 1.20 | 980 | 1360 | 720 | 1280 | 11.4 | ○ | Example |
| 16 | 15 | 452 | 275 | 512 | 529 | 1.03 | 1080 | 1420 | 820 | 1320 | 12.2 | ○ | Example |

(continued)

| Sample No. | Prior Austenite Grain Size | Steel Sheet Base Metal Hardness $_sH0$ | Nut Base Metal Hardness $_NH0$ | Maximum Hardness on Steel Sheet Side $_sHmax$ | Maximum Hardness on Nut Side $_NHmax$ | Hardness Ratio* | Hardened Region (on Steel Sheet Side) | Hardened Region (on Nut Side) | Region Where $_sH1 \geq 1.1 \times {}_sH0$ Is Satisfied (on Steel Sheet Side) | Region Where $_NH1 \geq 1.1 \times {}_NH0$ Is Satisfied (on Nut Side) | Peeling Strength FS | Delayed Fracture Resistance | Note |
|---|---|---|---|---|---|---|---|---|---|---|---|---|---|
| | μm | HV | HV | HV | HV | - | μm | μm | μm | μm | kN | | |
| 17 | 18 | 348 | 275 | 418 | 428 | 1.02 | 900 | 520 | 700 | 480 | 9.3 | ○ | Example |
| 18 | 12 | 309 | 275 | 447 | 535 | 1.20 | 660 | 760 | 480 | 720 | 9.4 | ○ | Example |

* hardness ratio = (maximum hardness $_NHmax$ on the nut side)/(maximum hardness $_sHmax$ on the steel sheet side)

Reference Signs List

1       nut
2       steel sheet
3       projection part
4       weld metal zone
5       region where $_SHmax$ exists
10      projection welded joint

**Claims**

1. A projection welded joint (10), the welded joint being formed by joining a steel sheet (2) having a tensile strength of 980 MPa or higher and a nut (1) by performing projection welding,

wherein, in a hardness distribution from the steel sheet to the nut through a weld metal (4) zone, each of a hardened region which exists on a side of the steel sheet with respect to a center of the weld metal zone and whose hardness $_SH1$ is higher than a hardness $_SH0$ of a base metal of the steel sheet and a hardened region which exists on a side of the nut with respect to the center of the weld metal zone and whose hardness $_NH1$ is higher than a hardness $_NH0$ of a base metal of the nut extends continuously for a distance of 500 $\mu$m or more, wherein, in the two hardened regions, a maximum hardness $_NHmax$ in a weld heat affected zone on the side of the nut is higher than a maximum hardness $_SHmax$ in a weld heat affected zone on the side of the steel sheet, wherein a region which has a center thereof at a position corresponding to the maximum hardness $_SHmax$ in the weld heat affected zone on the side of the steel sheet and which extends for a distance of 500 $\mu$m in a direction parallel to a joint interface and a distance of 50 $\mu$m in a direction perpendicular to the joint interface is formed of a martensite microstructure having a prior austenite grain size of 20 $\mu$m or less, and wherein the steel sheet has a chemical composition containing, by mass%,

C: 0.08% or more and 0.20% or less,
Si: 0.2% or more and 1.6% or less,
Mn: 1.0% or more and 3.4% or less,
P: 0.05% or less,
S: 0.01% or less,
Al: 0.01% or more and 0.10% or less,
N: 0.01% or less,
one or more selected from Nb: 0.005% or more and 0.050% or less and Ti: 0.005% or more and 0.050% or less, and optionally further containing

by mass%, one, two, or more selected from
B: 0.0050% or less,
V: 0.05% or less,
Cr: 0.50% or less,
Mo: 0.50% or less,
Co: 0.50% or less,
Cu: 0.50% or less,
Ni: 0.50% or less,
Sb: 0.020% or less, and
Ca and/or REM: 0.0050% or less, and

a balance of Fe and incidental impurities, wherein
the nut is made of a steel grade having an equivalent carbon content of 0.20% or more that is calculated as below:

equivalent carbon content (%) = C + Mn/6 + Si/24 + Ni/40 + Cr/5 + Mo/4 + V/14.

2. The projection welded joint according to Claim 1, wherein the hardness $_sH1$ on the side of the steel sheet satisfies relational expression (1) below and wherein the hardness $_NH1$ on the side of the nut satisfies relational expression (2) below, when $_sH0$ in relational expression (1) denotes the hardness of the base metal of the steel sheet and $_NH0$ in relational expression (2) denotes the hardness of the base metal of the nut:

$$_sH1 \geq 1.1 \times {_sH0} \quad \cdots (1)$$

$$_NH1 \geq 1.1 \times {_NH0} \quad \cdots (2)$$

3. The projection welded joint according to Claim 1 or 2, wherein the maximum hardness $_NHmax$ in the weld heat affected zone on the side of the nut and the maximum hardness $_sHmax$ in the weld heat affected zone on the side of the steel sheet satisfy relational expression (3) below:

$$_NHmax \geq 1.02 \times {_sHmax} \quad \cdots (3)$$

4. The projection welded joint according to any one of Claims 1 to 3, wherein the steel sheet has a zinc-based coating layer.

5. A projection welding method, the method including joining the steel sheet (2) and the nut (1) as in any one of Claims 1 to 4 by performing projection welding, that is, resistance welding,

   wherein the steel sheet and the nut are clamped, pressurized, and energized between a pair of electrodes, and wherein the tensile strength M (MPa) of the steel sheet and energizing time T (s) of the resistance welding, average welding current K (kA), and pressurizing force F (N) satisfy relational expression (4) below:

$$0.20 \leq ((T \times K)/4) \times (M/F)^{1/2} \leq 0.75 \quad \cdots (4)$$

6. The projection welding method according to claim 5, wherein
   the energizing time T is 0.10 s to 0.50 s, the average welding current K is 5 kA to 20 kA, and the pressurizing force F is 3000 N to 6000 N.


**Patentansprüche**

1. Buckelschweißverbindung (10), wobei die Schweißverbindung durch Verbinden eines Stahlblechs (2) mit einer Zugfestigkeit von 980 MPa oder höher und einer Mutter (1) durch Durchführen von Buckelschweißen ausgebildet ist,

   wobei in einer Härteverteilung von dem Stahlblech zu der Mutter durch eine Schweißmetallzone (4) sich sowohl ein gehärteter Bereich, der auf einer Seite des Stahlblechs in Bezug auf eine Mitte der Schweißmetallzone existiert und dessen Härte $_sH1$ höher ist als eine Härte $_sH0$ eines Basismetalls des Stahlblechs, als auch ein gehärteter Bereich, der auf einer Seite der Mutter in Bezug auf die Mitte der Schweißmetallzone existiert und dessen Härte $_NH1$ höher ist als eine Härte $_NH0$ eines Basismetalls der Mutter, kontinuierlich über eine Strecke von 500 $\mu$m oder mehr erstreckt,
   wobei in den beiden gehärteten Bereichen eine maximale Härte $_NHmax$ in einer Schweißwärmeeinflusszone auf der Seite der Mutter höher ist als eine maximale Härte $_sHmax$ in einer Schweißwärmeeinflusszone auf der Seite des Stahlblechs,
   wobei ein Bereich, dessen Mitte sich an einer Position befindet, die der maximalen Härte $_sHmax$ in der Schweißwärmeeinflusszone auf der Seite des Stahlblechs entspricht, und der sich über eine Strecke von 500 $\mu$m in einer Richtung parallel zu einer Verbindungsschnittstelle und über eine Strecke von 50 $\mu$m in einer Richtung senkrecht zu der Verbindungsschnittstelle erstreckt, aus einer Martensitmikrostruktur mit einer vorherigen Austenitkorngröße von 20 $\mu$m oder weniger ausgebildet ist, und
   wobei das Stahlblech eine chemische Zusammensetzung hat, die in Massen-% Folgendes aufweist:

   C: 0,08 % oder mehr und 0,20 % oder weniger,
   Si: 0,2 % oder mehr und 1,6 % oder weniger,
   Mn: 1,0 % oder mehr und 3,4 % oder weniger,

P: 0,05 % oder weniger,

S: 0,01 % oder weniger,

Al: 0,01 % oder mehr und 0,10 % oder weniger,

N: 0,01 % oder weniger,

eines oder mehrere ausgewählt aus Nb: 0,005 % oder mehr und 0,050 % oder weniger und Ti: 0,005 % oder mehr und 0,050 % oder weniger, und die optional ferner in Massen-% eines, zwei oder mehrere des Folgenden aufweist:

B: 0,0050 % oder weniger,

V: 0,05 % oder weniger,

Cr: 0,50 % oder weniger,

Mo: 0,50 % oder weniger,

Co: 0,50 % oder weniger,

Cu: 0,50 % oder weniger,

Ni: 0,50 % oder weniger,

Sb: 0,020 % oder weniger, und

Ca und/oder REM: 0,0050 % oder weniger, und

ein Gleichgewicht aus Fe und zufälligen Verunreinigungen, wobei

die Mutter aus einer Stahlsorte mit einem äquivalenten Kohlenstoffgehalt von 0,20 % oder mehr hergestellt ist, der wie folgt berechnet wird:

äquivalenter Kohlenstoffgehalt (%) = C + Mn/6 + Si/24 + Ni/40 + Cr/5 + Mo/4 + V/14.

2. Buckelschweißverbindung nach Anspruch 1, wobei die Härte $_SH1$ auf der Seite des Stahlblechs die folgende Beziehungsgleichung (1) erfüllt und wobei die Härte $_NH1$ auf der Seite der Mutter die folgende Beziehungsgleichung (2) erfüllt, wenn $_SH0$ in der Beziehungsgleichung (1) die Härte des Basismetalls des Stahlblechs und $_NH0$ in der Beziehungsgleichung (2) die Härte des Basismetalls der Mutter bezeichnet:

$$_SH1 \geq 1,1 \times {_SH0} \quad \cdots \ (1)$$

$$_NH1 \geq 1,1 \times {_NH0} \quad \cdots \ (2)$$

3. Buckelschweißverbindung nach Anspruch 1 oder 2, wobei die maximale Härte $_NHmax$ in der Schweißwärmeeinflusszone auf der Seite der Mutter und die maximale Härte $_SHmax$ in der Schweißwärmeeinflusszone auf der Seite des Stahlblechs die folgende Beziehungsgleichung (3) erfüllen:

$$_NHmax \geq 1,02 \times {_SHmax} \quad \cdots \ (3)$$

4. Buckelschweißverbindung nach einem der Ansprüche 1 bis 3, wobei das Stahlblech eine Zink-basierte Deckschicht aufweist.

5. Buckelschweißverfahren, wobei das Verfahren das Verbinden des Stahlblechs (2) und der Mutter (1) gemäß einem der Ansprüche 1 bis 4 durch Ausführen von Buckelschweißen, d.h. Widerstandsschweißen, aufweist,

wobei das Stahlblech und die Mutter zwischen einem Paar von Elektroden geklemmt, unter Druck gesetzt und mit Strom versorgt werden, und

wobei die Zugfestigkeit M (MPa) des Stahlblechs und die Stromzufuhrzeit T (s) des Widerstandsschweißens, der durchschnittliche Schweißstrom K (kA) und die Druckkraft F (N) die folgende Beziehungsgleichung (4) erfüllen:

$$0,20 \leq ((T \times K)/4) \times (M/F)^{1/2} \leq 0,75 \quad \cdots \ (4)$$

6. Buckelschweißverfahren nach Anspruch 5, wobei die Stromzufuhrzeit T 0,10 s bis 0,50 s beträgt, der durchschnittliche Schweißstrom K 5 kA bis 20 kA beträgt und die Druckkraft F 3000 N bis 6000 N beträgt.

**Revendications**

1. Joint de soudure par projection (10), le joint de soudure étant formé en joignant une tôle d'acier (2) présentant une résistance à la traction de 980 MPa ou plus et un écrou (1) par la réalisation d'un soudage par projection,

    dans lequel, dans une distribution de dureté depuis la tôle d'acier jusqu'à l'écrou à travers une zone de métal de soudure (4), chacune d'une région durcie qui existe sur un côté de la tôle d'acier par rapport à un centre de la zone de métal de soudure et dont la dureté $_sH1$ est supérieure à une dureté $_sH0$ d'un métal de base de la tôle d'acier et d'une région durcie qui existe sur un côté de l'écrou par rapport au centre de la zone de métal de soudure et dont la dureté $_NH1$ est supérieure à une dureté $_NH0$ d'un métal de base de l'écrou s'étend en continu sur une distance de 500 $\mu$m ou plus,
    dans lequel, dans les deux régions durcies, une dureté maximale $_NHmax$ dans une zone affectée par la chaleur de soudage sur le côté de l'écrou est supérieure à une dureté maximale $_sHmax$ dans une zone affectée par la chaleur de soudage sur le côté de la tôle d'acier,
    dans lequel une région qui présente un centre de celui-ci en une position correspondant à la dureté maximale $_sHmax$ dans la zone affectée par la chaleur de soudage sur le côté de la tôle d'acier et qui s'étend sur une distance de 500 $\mu$m dans une direction parallèle à une interface de joint et une distance de 50 $\mu$m dans une direction perpendiculaire à l'interface de joint est formée d'une microstructure martensitique présentant une dimension de grain d'austénite antérieure de 20 $\mu$m ou moins, et
    dans lequel la tôle d'acier présente une composition chimique contenant, en % en masse,

    C : 0,08 % ou plus et 0,20 % ou moins,
    Si : 0,2 % ou plus et 1,6 % ou moins,
    Mn : 1,0 % ou plus et 3,4 % ou moins,
    P : 0,05 % ou moins,
    S : 0,01 % ou moins,
    Al : 0,01 % ou plus et 0,10 % ou moins,
    N : 0,01 % ou moins,
    un ou plus sélectionnés parmi Nb : 0,005 % ou plus et 0,050 % ou moins et Ti : 0,005 % ou plus et 0,050 % ou moins, et contenant en outre facultativement

    en % en masse, un, deux, ou plus sélectionnés parmi
    B : 0,0050 % ou moins,
    V : 0,05 % ou moins,
    Cr : 0,50 % ou moins,
    Mo : 0,50 % ou moins,
    Co : 0,50 % ou moins,
    Cu : 0,50 % ou moins,
    Ni : 0,50 % ou moins,
    Sb : 0,020 % ou moins, et
    Ca et/ou REM : 0,0050 % ou moins, et
    un reste de Fe et d'impuretés accidentelles, dans lequel
    l'écrou est fabriqué dans une nuance d'acier présentant une teneur en carbone équivalent de 0,20 % ou plus qui est calculée comme ci-dessous :

    teneur en carbone équivalent (%) = C + Mn/6 + Si/24 + Ni/40 + Cr/5 + Mo/4 + V/14.

2. Joint de soudure par projection selon la revendication 1, dans lequel la dureté $_sH1$ sur le côté de la tôle d'acier satisfait à l'expression relationnelle (1) ci-dessous et dans lequel la dureté $_NH1$ sur le côté de l'écrou satisfait à l'expression relationnelle (2) ci-dessous, lorsque $_sH0$ dans l'expression relationnelle (1) désigne la dureté du métal de base de la tôle d'acier et $_NH0$ dans l'expression relationnelle (2) désigne la dureté du métal de base de l'écrou :

$$_sH1 \geq 1,1 \times {_sH0} \cdot \cdot \cdot (1)$$

$$_NH1 \geq 1,1 \times {_NH0} \cdot \cdot \cdot (2)$$

3. Joint de soudure par projection selon la revendication 1 ou 2, dans lequel la dureté maximale $_N$Hmax dans la zone affectée par la chaleur de soudage sur le côté de l'écrou et la dureté maximale $_S$Hmax dans la zone affectée par la chaleur de soudage sur le côté de la tôle d'acier satisfont à l'expression relationnelle (3) ci-dessous :

$$_N\text{Hmax} \geq 1{,}02 \times {_S}\text{Hmax} \cdots (3)$$

4. Joint de soudure par projection selon l'une quelconque des revendications 1 à 3, dans lequel la tôle d'acier présente une couche de revêtement à base de zinc.

5. Procédé de soudage par projection, le procédé incluant la jonction de la tôle d'acier (2) et de l'écrou (1) selon l'une quelconque des revendications 1 à 4 par la réalisation d'un soudage par projection, à savoir, un soudage par résistance,

   dans lequel la tôle d'acier et l'écrou sont serrés, mis sous pression, et mis sous tension entre une paire d'électrodes, et
   dans lequel la résistance à la traction M (MPa) de la tôle d'acier et le temps de mise sous tension T (s) du soudage par résistance, le courant de soudage moyen K (kA), et la force de mise sous pression F (N) satisfont à l'expression relationnelle (4) ci-dessous :

$$0{,}20 \leq ((T \times K)/4) \times (M/F)A2 \leq 0{,}75 \cdots (4)$$

6. Procédé de soudage par projection selon la revendication 5, dans lequel
   le temps de mise sous tension T est 0,10 s à 0,50 s, le courant de soudage moyen K est 5 kA à 20 kA, et la force de mise sous pression F est 3 000 N à 6 000 N.

# FIG. 1

(a)

CENTER OF WELD METAL ZONE 2

(ENLARGED VIEW OF PORTION A)

4

1

5

HARDNESS MEASUREMENT LINE

NUT SIDE ⟵ ⟹ STEEL SHEET SIDE

HV

NHmax

NH1

NH0

sHmax

sH1

sH0

HARDENED REGION ON NUT SIDE

HARDENED REGION ON STEEL SHEET SIDE

500 μm 500 μm

(b)

1

2

1

3

(c)

10

1

2

PORTION A

1

4

# FIG. 2

(a)

CENTER OF WELD METAL ZONE
(ENLARGED VIEW OF PORTION B)

NUT SIDE ←→ STEEL SHEET SIDE

HV

HARDNESS MEASUREMENT LINE

NHmax — sHmax
NH1 — sH1
NH0 — sH0

HARDENED REGION ON NUT SIDE      HARDENED REGION ON STEEL SHEET SIDE

500 μm 500 μm

(b)

(c)

PORTION B

# FIG. 3

# FIG. 4

# FIG. 5

# FIG. 6

## FIG. 7

## FIG. 8

## FIG. 9

# FIG. 10

# FIG. 11

# FIG. 12

(a)

(b)

(c)

(d)

FORGED NATURAL SHAPE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5708350 B
- JP 2010115678 A
- JP 2019173157 A
- JP 2012082890 A
- WO 2015127431 A1